Europäisches Patentamt

**European Patent Office**

**Office européen des brevets**

(19)

(11) Publication number: **0 022 309**

A2

(12)

# EUROPEAN PATENT APPLICATION

(21) Application number: **80301674.0**

(22) Date of filing: **20.05.80**

(51) Int. Cl.³: **B 65 D 81/14**

(30) Priority: **21.05.79 DE 7914659 U**

(43) Date of publication of application:
**14.01.81 Bulletin 81.2**

(84) Designated Contracting States:
**FR GB**

(71) Applicant: **The British Petroleum Company Limited**
**Britannic House Moor Lane**
**London EC2Y 9BU(GB)**

(72) Inventor: **Oberhuber, Dieter Horst**
**Stengelstrasse 1**
**D-8000 Munchen 40(DE)**

(74) Representative: **Ryan, Edward Terrence et al,**
**BP TRADING LIMITED Patents and Licensing Division**
**Chertsey Road**
**Sunbury-on-Thames Middlesex, TW16 7LN(GB)**

(54) **Air cushion film especially for packaging purposes.**

(57) An air cushion film consists of a smooth plastics film, joined to a plastics film provided with projections. The bases of the projections and the curved transition portions between the bases and sides of the projection are abrasively/oxidatively pre-treated and these portions only are covered with a layer consisting only of adhesive.

AOE Plastic GmbH
Rotbuchenstr. 1
8000 Munich 90

21st May, 1979.

B 1369 A1/ra

DESCRIPTION

Air cushion foil, especially for packaging
purposes

The invention relates to an air cushion film, especially for
packaging purposes, consisting of a first smooth plastic film and a
second plastic film provided with knob-type depressions, in which
the two films are joined together in such a way that the first film
closes the knob-type depressions of the second foil and in which the
knob-type depressions consist of a knob base, a knob casing and a
curved transition zone between the knob base and the knob casing.

The air chambers in the air cushion film, also called the knob
film, or bubble film formed by the knob-type depressions, impart to
this film their outstanding properties. namely an excellent protection
for packaged goods against mechanical effects and a low specific
gravity of the film, plus thermal insulation properties, which is
of particular advantage in the case of certain products.   The air
cushion film which is laid around the product to be packaged is
fixed to the product by string or bands or by a lyer of adhesive.
If an adhesive layer is used, remains of adhesive are often left
behind on the packaged product when the air cushion foil is pulled
off the packaged goods, the removal of which is time-consuming and
often can only be achieved by damaging the packaged goods.

The object of the present innovation consists in avoiding
the drawbacks of the know air cushion films and creating an air
cushion film of the type mentioned above, which facilitates a
simple and troublefree fixing and removal of the air cushion film with
respect to the packaged product.

This problem is solved by abrasively/oxidatively pre-treating the
knob bases and curved transition zones and in that only the abrasively/
oxidatively pre-treated knob bases and curved transition zones are
treated with a layer consisting only of adhesive.  The new air cushion
films, which preferably consist of polyethylene, are thus abrasively
selectively pre-treated both in the zone of their knob bases and in
the curved transition zones to the knob casings, for example, by a
corona treatment.  This guarantees that the adhesive layer applied

**0022309**

21st May, 1979.

B 1369 Al/ra

(In handwriting)

German Registered Design
G 79 14 659.1
AT.21.05.1979
ET.=VT. 30.08.1979
M PAT 36

C L A I M

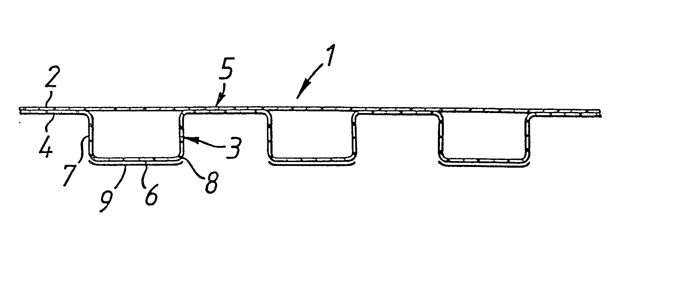

Air cushion film, especially for packaging purposes, consisting
of a smooth plastic film and a second plastic film provided with
knob-type depressions, in which both films are joined together in such
a way that the first film seals the knob-type depressions of the
second foil, and in which the knob-type depressions consist of a
knob bottom, a knob casing and a bent transition zone between the
knob base and the knob casing, the knob bases (6) and curved transition
zones (8) are abrasively/oxidatively pre-treated and that solely the
knob bases (6) and curved transition zone (8) are covered with a
layer (9) consisting only of adhesive.

BAD ORIGINAL

1/1